# EUROPEAN PATENT SPECIFICATION

(11) **EP 2 984 972 B1**
(45) Date of publication and mention of the grant of the patent: **17.04.2019**
(21) Application number: 15180579.3
(22) Date of filing: 11.08.2015
(51) Int. Cl.: A47J 37/07

(54) **SMOKELESS GRILL**
RAUCHLOSER GRILL
GRIL SANS FUMÉE

(30) Priority: 13.08.2014 CN 201410398574
(43) Date of publication of application: 17.02.2016
(73) Proprietor: Liao, Zhiwen, Beijiao Town, Shunde, Foshan Guangdong 528311 (CN)
(72) Inventor: Liao, Zhiwen, Beijiao Town, Shunde, Foshan Guangdong 528311 (CN)
(74) Representative: 2K Patentanwälte Blasberg Kewitz & Reichel

(56) References cited:
- WO-A1-2014/042342
- CN-U- 201 986 593
- FR-A1- 2 860 965
- US-A- 3 868 943

## Description

### TECHNICAL FIELD

The invention involves a barbecue grill, specifically, a smokeless barbecue grill.

### BACKGROUND TECHNOLOGY

The barbecue grill, also called baking oven, charcoal grill, refers to a device used to cook food with the heat generated from the burning of charcoal or pollution-free charcoal, usually an open or half-open structure. For the barbecue grill which cooks by means of air convection, the barbecue grill is usually provided with one or more heaters (charcoal braziers), and it heats air through the heater, and transfers the heat through the air convection to the food being cooked. However, owing to the unavoidable defect that during the process of energy transfer in the air, the temperature of the air close to the heater is higher while the temperature of the air far away from the heater is low, the barbecue grill always fails to efficiently and evenly cook the food and it will generate lots of oil smoke and dust, as well as the harmful gases caused by insufficient burning of charcoal such as carbon monoxide CO and smog, which impair the consumers' health and seriously pollute the environment.

To solve such defects as non-uniform temperature of cooking and large emission amount of smog, some existing barbecue grill cooks the food by arranging multiple heaters on two opposite sides of the cooking chamber, so as to increase the uniformity of heating. Moreover, to improve the uniformity of heating, some barbecue grill sets up the convection fans in the cooking chamber to accelerate the air convection and improve the uniformity of hot air distribution.

US 3 868 943 A discloses a two piece portable forced draft, solid fuel burning cooker that includes a cooker assembly and blower assembly of such structure that the blower assembly may be removably nested in the cooker assembly when the cooker is in a first position to provide a compact unit that is easily transported such as on a hiking trip or the like. The cooker when in a second position capable of supporting and heating a cooking utensil, with the fuel used for supplying heat from the cooker being that which is commonly available, as for instance, charcoal briquetts, acorns, pieces of small tree branches, twigs and the like.

FR 2 860 965 A1 discloses a barbecue ignition booster having a manual/electric fan and resistance delivering flow of hot air to charcoal layer through bottom grid. The ignition booster consists of a manual or electric single or multispeed fan and a manually-controlled electrical resistance, delivering hot air through a pipe with a valve and a grid in the bottom of the charcoal container. The fan and resistance are similar to those used in hair driers or hot air guns, and quickly drive any moisture from the fuel, making it easier to light and reach the required temperature.

CN 201 986 593 U discloses an auxiliary thermal convection type smokeless charcoal barbecue oven which comprises an oven body, charcoal boxes, an oil receiving drawer, an ash receiving drawer, a switch box and two continuous type speed adjusting draught fans. The number of the charcoal box is two; and the two charcoal boxes are arranged at both sides of the upper part of the oven body. The oil receiving drawer is arranged at the lower part of the middle of the two charcoal boxes; and the ash receiving drawer is arranged at the lower part of the oil receiving drawer. The two continuous type speed adjusting draught fans are arranged at the lower part of the oven body and are arranged at both sides of the ash receiving drawer. An air current buffer chamber is arranged at the upper part of the oven body among the charcoal boxes and the continuous type speed adjusting draught fans. The auxiliary thermal convection type smokeless charcoal barbecue oven mainly adopts an auxiliary thermal convection way in structural design so as to be beneficial to the collection and utilization of heat energy; in terms of environmental effect, waste oil and carbon residue generated by barbecue adopts a gathering and processing way so as to be beneficial to the environmental protection. As the barbecue oven adopts environmental friendly and energy saving material, the barbecue oven has excellent thermal insulating and heat-shielding performances.

WO 2014/042342 A1 discloses a roaster comprising: a main container having an internal space; an upper supporter which is provided with a flame outlet on a surface that faces the lower side of the main container, and which is provided with a baking sheet support portion around the circumference of the flame outlet so as to be coupled with the main container; and a fuel container which is provided with a fuel filling portion therein and is provided with a spacer at a position of an outer surface of the fuel filling portion, and which is installed in the main container so as to be arranged at a position that faces the flame outlet of the upper supporter (20), wherein the fuel container is spatially separated from surfaces of the main container and the upper supporter by the spacer.

Although the existing barbecue grill solves the defects of non-uniformity of heating and large emission amount of smog to certain degree, its structure is complex, the production cost is high, and it cannot meet the users' use requirements. Therefore, it is necessary to make further improvement.

### CONTENT OF THE INVENTION

The invention aims to provide a smokeless barbecue grill with simple and reasonable structure, low manufacturing cost, uniform and adjustable fire, simple and easy operation, reliable performance, energy-saving and environmentally-friendliness, clean and sanitary, and high thermal efficiency and may realize a smokeless barbecue grill for smokeless barbecue, in order to overcome the shortcomings in existing technology.

A smokeless barbecue grill designed for the above purpose, comprising a base and a case being placed above the base, is characterized in that: the case is a hollow structure and above it there is a bracket, containing a charcoal tray; one or more fans are arranged on the base; the fan of the barbecue grill is provided with one or more air ducts, which are tilted and bended and form an included angle with the longitudinal direction of the barbecue grill.

An ignition pan is arranged between the bracket and the charcoal tray, the fan is laterally below, on the low-side of, the ignition pan, and is connected to a sidewall of-the ignition pan through the tilted air duct, the airflow generated by the fan enters the ignition pan through the air duct, and forms the rotational airflow in the ignition pan. Several air inlets are arranged in corresponding air duct of the bracket, the bearing part is arranged on the bracket, the charcoal tray is on the bearing part of bracket, and its bottom and the bottom of bracket form the ignition pan.

The bottom air duct of the charcoal tray is arranged with several air vents, which are distributed in spiral shape, the rotational convex part, arranged at the bottom of the charcoal tray along the direction of rotational airflow, is in the water drop shape with high inclination, low on the small end and high on the big end, and the convex height of one end is lower than the convex height of the other end; the air vents are arranged on the rotational convex part.

The fan obtains power supply from the dry battery, external power supply or their combination, and achieves airflow control through mechanical control equipment or touch control equipment.

The fan obtains power supply from the dry battery, and achieves airflow control through mechanical control equipment.

The mechanical control equipment contains the potentiometer switch knob on external wall of the case, the potentiometer switch is set on the potentiometer switch knob, and the potentiometer switch achieves electrically controlled connection with the fan through power line; a working indicator lamp is installed on the potentiometer switch knob.

A barbecue grate or a barbecue plate is placed on the bracket.

The invention, after improvement on the above structure, sets one or more fans on the base, the fan obtains the driving power supply from the dry battery, the potentiometer switch knob is set on the outer wall of case, and the fan adjusts the current through the potentiometer switch knob, so as to control the airflow strength of the fan, thus greatly facilitating the user to use, meanwhile, since the fire is adjustable, the cooked food tastes better, has high nutritional content and is more healthy to eat; the air duct forms a included angle with the longitudinal direction of the barbecue grill, the fan is placed on the lower side of the ignition pan and is connected to a sidewall or the side of the ignition pan through the tilted air duct, the airflow generated by the fan enters the ignition pan through the air duct, and forms the rotational airflow in the ignition pan, so as to make the burning of charcoal in the charcoal tray connected to the ignition pan more sufficient and make the fire more fierce; moreover, the bottom of the charcoal tray corresponding air duct is arranged with several air vents, which are distributed in spiral shape, the rotational convex part, arranged at the bottom of the charcoal tray along the direction of rotational airflow, and the rotational convex part is tilted, low in front end and high behind, and the convex height of one end is lower than the convex height of the other end, and the air vents are arranged on the rotational convex part, to make the air flow from the air duct smoother and form the rotational airflow, and make the fire more uniform and make the burning of charcoal further more sufficient, thus reducing the emission of smog; and effectively solving the problems with present technology such as non-uniform temperature, non-adjustable fire, and the heavy smoke due to the insufficient burning of charcoal when the barbecue grill is working. The invention features the simple and reasonable structure, low manufacturing cost, uniform and adjustable fire, simple and easy operation, reliable performance, energy-saving and environmentally-friendliness, clean and sanitary, sufficient burning of charcoal and no smoke, and high thermal efficiency, so the user may truly realize smokeless barbecue, moreover, the main components made of stainless steel, are durable and strongly practical.

### DESCRIPTION OF THE DRAWINGS

Figure 1.1 and 1.2 is the structure diagram of an example of the invention.
Figure 2.1 and 2.2 is the structure diagram of a profile of an example of the invention.
Figure 3.1 and 3.2 is the structure diagram of another profile of an example of the invention.
Figure 4.1 and 4.2 is the structure diagram of the bracket.
Figure 5.1, 5.2 and Figure 6 are the structure diagram of the charcoal tray.

### SPECIFIC IMPLEMENTATION METHOD

The following further describes the invention in combination with the drawings and examples.

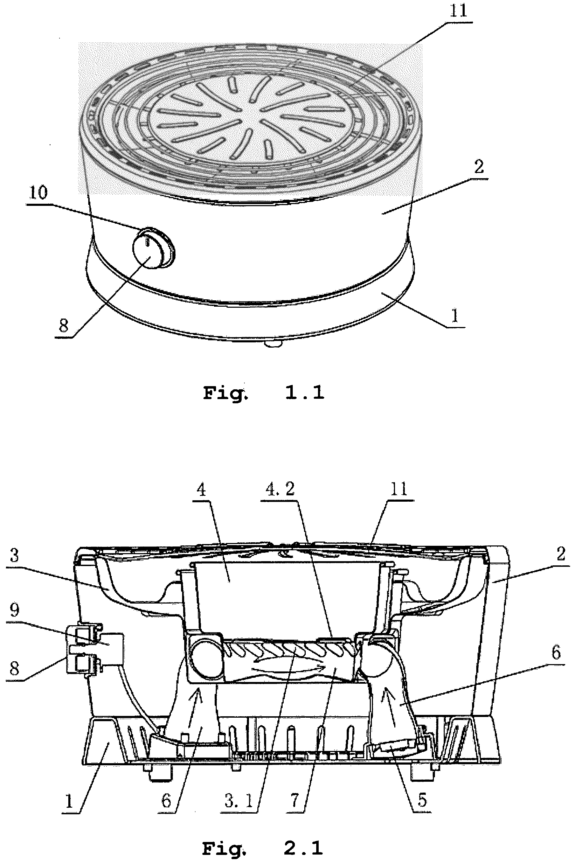

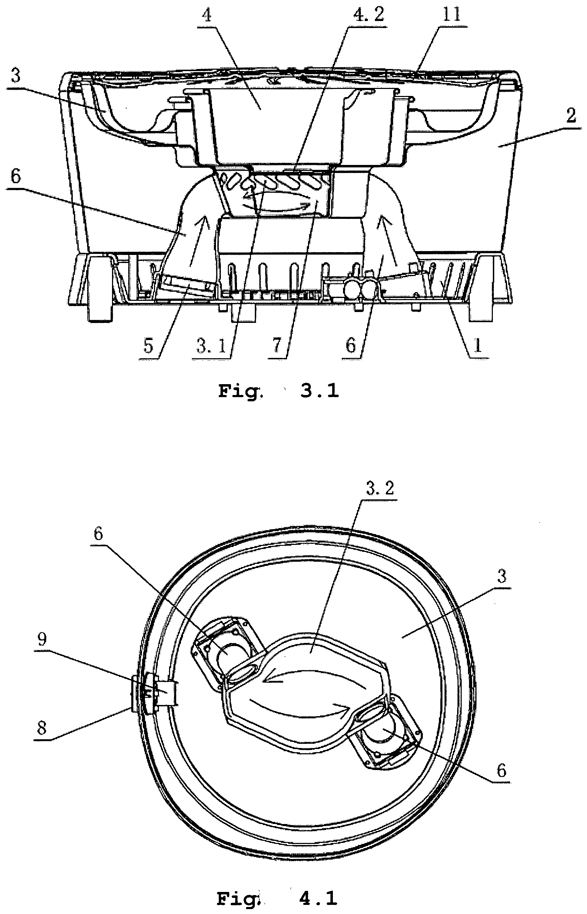

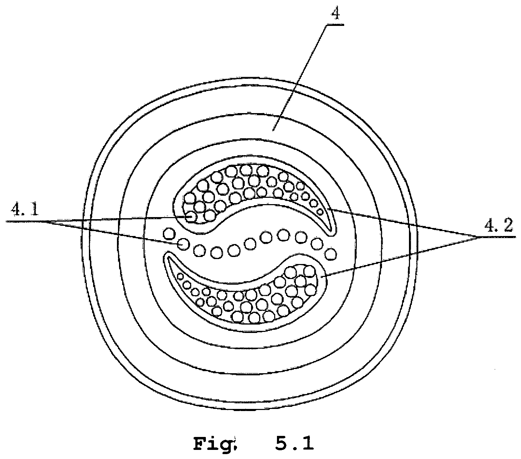

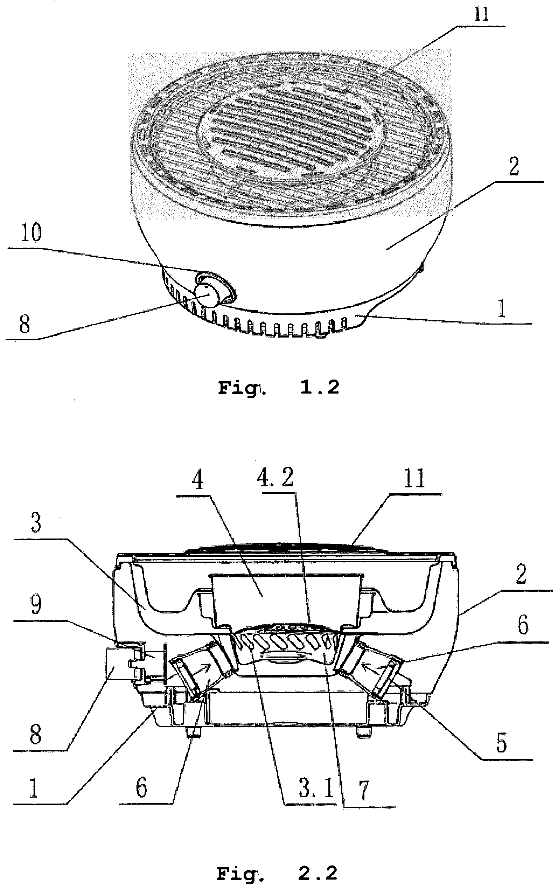

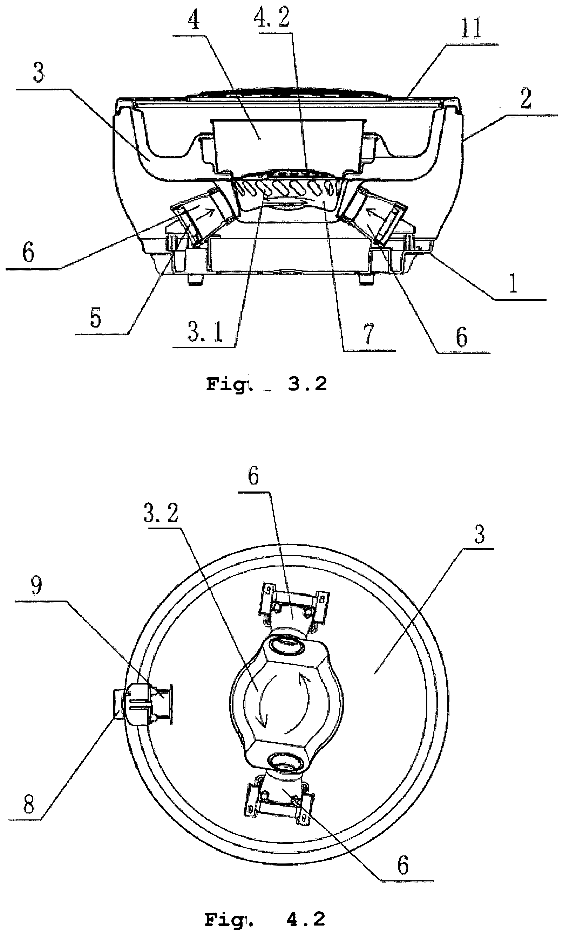

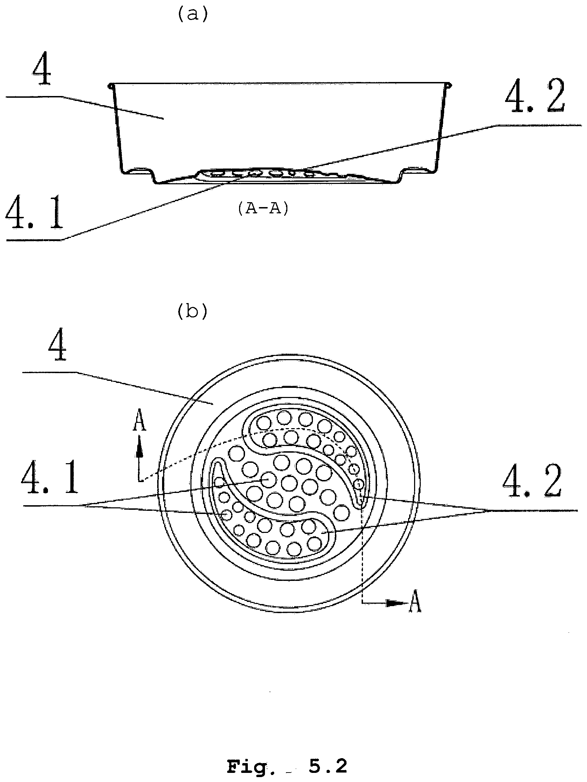

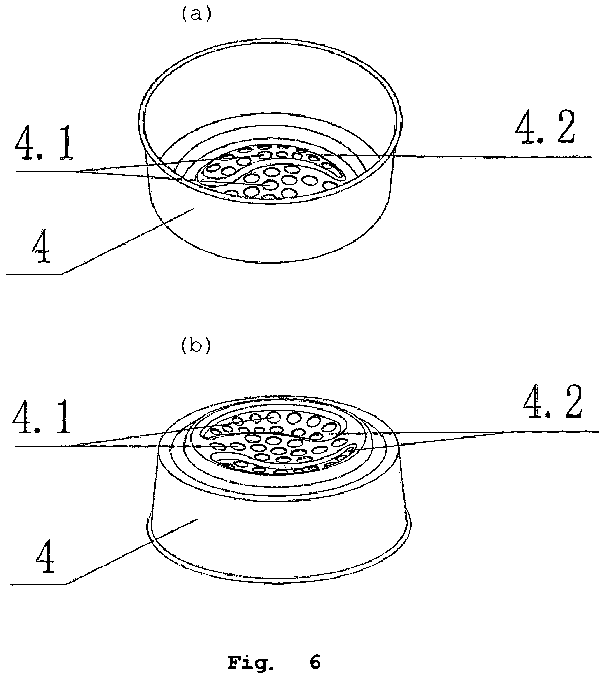

As shown in Figure 1 to Figure 6, the smokeless barbecue grill comprises a base 1 and the case 2 placed above the base 1, the case 2 is a hollow structure and above it there is a bracket 3containing a charcoal tray 4; one or more fans 5 are arranged on the base 1; the fan 5 of the barbecue grill is provided with one or more air ducts 6, which are tilted and bended and form a included angle with the longitudinal direction of the barbecue grill.

In the example, two fans 5 are arranged on the base 1, the fans 5 of the barbecue grill are provided with two air ducts 6, and the two fans 5 and air ducts 6 are arranged oppositely.

An ignition pan 7 is arranged between the bracket 3 and the charcoal tray 4, the fan 5 is laterally below, on the low-side of, the ignition pan 7, and is connected to the side of the ignition pan 7 through the tilted air duct 6, the airflow generated by the fan 5 enters the ignition pan 7 through the air duct 6, and forms the rotational airflow in the ignition pan 7, thus making the charcoal in the charcoal tray 4 connected to the ignition pan 7 burn more sufficiently and make the fire more fierce.

Several air inlets 3.1 are arranged in corresponding air duct 6 of the bracket 3, the air inlet 3.1 may be arranged on the wall of bracket 3, or on the bottom of the bracket 3; the bearing part 3.2 is also arranged on the bracket 3, and the charcoal tray 4 is on the bearing part 3.2 of bracket 3, and its bottom and the bottom of bracket 3 form the ignition pan 7.

The bottom of the charcoal tray 4 corresponding air duct 6 is arranged with several air vents 4.1, the air vents 4.1 are distributed in spiral shape, the rotational convex part 4.2, arranged at the bottom of the charcoal pan 4 along the direction of rotational airflow, is in the water drop shape with high inclination, low on the small end and high on the big end, and the convex height of one end is lower than the convex height of the other end, and the air vents 4.1 are arranged on the rotational convex part 4.2; the air from the air duct 6 flows smoother through the air vents 4.1 and the convex part 4.2, and forms the rotational airflow, thus making the airflow more uniform and make the charcoal burn more sufficient, so as to reduce the emission of smog.

In the above structure, the fan 5 obtains power supply from the dry battery, external power supply or their combination and achieves airflow control through mechanical control equipment or touch control equipment, thus greatly facilitating the user to use, meanwhile, since the fire is adjustable, the cooked food tastes better, has high nutritional content and is more healthy to eat.

Specifically, the fan 5 obtains power supply from the dry battery, and achieves airflow control through mechanical control equipment. The mechanical control equipment contains the potentiometer switch knob 8 on external wall of the case 2, the potentiometer switch 9 is set on the potentiometer switch knob 8, and the potentiometer switch 9 achieves electrically controlled connection with the fan 5 through power line; a working indicator lamp 10 is installed on the potentiometer switch knob 8, to facilitate the user to observe the working state of the barbecue grill.

A barbecue grate or barbecue plate 11 is placed on the bracket 3.

To extend the service life of the barbecue grill, the above main components made of stainless steel, are durable.

The above describes the optimized scheme of the invention, and its simple modification or alteration by ordinary technicians of the field all falls within the protection range of the invention.

## Claims

1. A smokeless barbecue grill, comprising a base (1) and a case (2) placed above the base (1), wherein the case (2) comprises a hollow structure and a bracket (3) being arranged above the case (2), wherein the bracket (3) contains a charcoal tray (4); wherein one or more fans (5) are arranged on the base (1); the fan (5) for the barbecue grill being provided with one or more air ducts (6), wherein said one or more air ducts (6) are tilted and bended and form an included angle with a longitudinal direction of the barbecue grill,
**characterized in that** an ignition pan (7) is arranged between the bracket (3) and the charcoal tray (4), the fan (5) being arranged laterally below the ignition pan (7) and being connected to a sidewall of the ignition pan (7) through the tilted air ducts (6), wherein an airflow is generated by the fan (5) enters the ignition pan (7) through the air ducts (6) and forms rotational airflow within the ignition pan (7),
that a plurality of air inlets (3.1) of the bracket (3) are arranged in corresponding ones of the air ducts (6), wherein a bearing part (3.2) is arranged on the bracket (3), wherein the charcoal tray (4) is arranged on the bearing part (3.2) of the bracket (3), and the ignition pan (7) is arranged between a bottom of the charcoal tray (4) and a bottom of the bracket (3), and
that the bottom of the charcoal tray (4) corresponding the ignition pan (7) is arranged with a plurality of air vents (4.1), the air vents (4.1) are distributed in a spiral shape, wherein a rotational convex part (4.2) is arranged at the bottom of the charcoal tray (4) along the direction of rotational airflow and is arranged in an inclined water drop shape with a small end and a big end, wherein in a cross-sectional view the rotational convex part (4.2) is low on the small end and high on the big end, such that a convex height of one end is lower than a convex height of another end; wherein a part of the plural air vents (4.1) are arranged on the rotational convex part (4.2).

2. The smokeless barbecue grill according to Claim 1, **characterized in that** the fan (5) obtains power supply from a dry battery, an external power supply or a combination thereof, and achieves airflow control through a mechanical control equipment or a touch control equipment.

3. The smokeless barbecue grill according to Claim 2, **characterized in that** if it contains a mechanical control equipment, said mechanical control equipment contains a potentiometer switch knob (8) on an external wall of the case (2), a potentiometer switch (9) is set on the potentiometer switch knob (8), and the potentiometer switch (9) achieves an electrically controlled connection with the fan (5) through a power line; a working indicator lamp (10) is installed on the potentiometer switch knob (8).

4. The smokeless barbecue grill according to Claim 3, **characterized in that** a barbecue grate or a barbecue plate (11) is placed on the bracket (3).

## Patentansprüche

1. Rauchfreier Grill, umfassend eine Basis (1) und ein Gehäuse (2), das über der Basis (1) angeordnet ist, wobei das Gehäuse (2) eine hohle Struktur und eine Halterung (3) umfasst, die über dem Gehäuse (2) angeordnet ist, wobei die Halterung (3) eine Kohlenschale (4) enthält; wobei ein oder mehrere Lüfter (5) an der Basis (1) angeordnet sind; wobei der Ventilator (5) für den Grill mit einem oder mehreren Luftkanälen (6) versehen ist, wobei der eine oder die mehreren Luftkanäle (6) geneigt und gebogen sind und einen eingeschlossenen Winkel mit einer Längsrichtung des Grills bilden,
**dadurch gekennzeichnet,**
**dass** eine Zündschale (7) zwischen der Halterung (3) und der Kohlenschale (4) angeordnet ist, wobei der Lüfter (5) seitlich unterhalb der Zündschale (7) angeordnet und mit einer Seitenwand der Zündschale (7) über die geneigten Luftkanäle (6) verbunden ist, wobei ein Luftstrom durch den Lüfter (5) erzeugt wird, der durch die Luftkanäle (6) in die Zündschale (7) eintritt und einen Rotationsluftstrom innerhalb der Zündschale (7) ausbildet,
**dass** eine Vielzahl von Lufteinlässen (3.1) der Halterung (3) in entsprechenden der Luftkanäle (6) angeordnet sind, wobei ein Lagerteil (3.2) an der Halterung (3) angeordnet ist, wobei die Kohlenschale (4) an dem Lagerteil (3.2) der Halterung (3) angeordnet ist und die Zündschale (7) zwischen einem Boden der Kohlenschale (4) und einem Boden der Halterung (3) angeordnet ist, und
**dass** der Boden der Kohlenschale (4), der zu der Zündschale (7) passt, mit einer Vielzahl von Lüftungsöffnungen (4.1) versehen ist, wobei die Lüftungsöffnungen (4.1) spiralförmig verteilt sind, wobei ein Rotations-Konvex-Bereich (4.2) am Boden der Kohlenschale (4) entlang der Rotationsluftstrom-Richtung angeordnet ist und in einer geneigten Wassertropfenform mit einem schmalen Ende und einem großen Ende angeordnet ist, wobei in einer Querschnittsansicht der Rotations-Konvex-Bereich (4.2) an dem schmalen Ende niedrig und an dem großen Ende hoch ist, so dass eine konvexe Höhe eines Endes niedriger ist als eine konvexe Höhe eines anderen Endes; wobei ein Teil der mehreren Lüftungsöffnungen (4.1) an dem Rotations-Konvex-Bereich (4.2) angeordnet ist.

2. Rauchfreier Grill nach Anspruch 1, **dadurch gekennzeichnet, dass** der Ventilator (5) die Stromversorgung von einer Trockenbatterie, einer externen Stromversorgung oder einer Kombination derselben erhält und eine Luftströmungssteuerung durch eine mechanische Steuereinrichtung oder eine Berührungssteuerungseinrichtung erreicht.

3. Rauchfreier Grill nach Anspruch 2, **dadurch gekennzeichnet, dass**, wenn er eine mechanische Steuereinrichtung aufweist, diese mechanische Steuereinrichtung einen Potentiometer-Schaltknopf (8) an einer Außenwand des Gehäuses (2) aufweist, einen Potentiometer-Schalter (9), der an dem Potentiometer-Schaltknopf (8) angesetzt ist, aufweist, und der Potentiometer-Schalter (9) eine elektrisch gesteuerte Verbindung mit dem Lüfter (5) über eine Stromleitung erreicht; wobei eine Betriebsanzeigeleuchte (10) an dem Potentiometer-Schaltknopf (8) installiert ist.

4. Rauchfreier Grill nach Anspruch 3, **dadurch gekennzeichnet, dass** ein Grillrost oder eine Grillplatte (11) auf der Halterung (3) platziert ist.

## Revendications

1. Un gril sans fumée, comprenant une base (1) et un boîtier (2) disposé au-dessus de la base (1), dans lequel le boîtier (2) comprend une structure creuse et une support (3) disposée au-dessus du boîtier (2), dans lequel le support (3) contient un bac à charbon (4); dans lequel un ou plusieurs ventilateurs (5) sont disposés sur la base (1); le ventilateur (5) du grill étant pourvu d'un ou de plusieurs conduits d'air (6), dans lequel ledit ou lesdits conduits d'air (6) sont inclinés et courbés et forment un angle inclus avec une direction longitudinale du grill,
**caractérisé en ce que** un plateau d'allumage (7) est disposé entre le support (3) et le bac à charbon (4), le ventilateur (5) étant disposé latéralement sous le plateau d'allumage (7) et connecté à une paroi latérale du plateau d'allumage (7) par les conduits d'air inclinés (6), dans lequel un flux d'air généré par le ventilateur (5) pénètre dans le plateau d'allumage (7) par les conduits d'air (6) et forme un flux d'air rotatif à l'intérieur du plateau d'allumage (7), et
**en ce que** plusieurs entrées d'air (3.1) du support (3) sont disposées dans les conduits d'air correspondants (6), dans lequel un élément de palier (3.2) est disposé sur le support (3), dans lequel le bac à charbon (4) est agencé sur l'élément de palier (3.2) du support (3), et le plateau d'allumage (7) est disposé entre un fond du bac à charbon (4) et un fond du support (3), et
**en ce que** le fond du bac à charbon (4) correspondant au plateau d'allumage (7) est agencé avec une pluralité de bouches d'aération (4.1), les bouches d'aération (4.1) étant réparties suivant une forme de spirale, dans laquelle une partie convexe rotative (4.2) est disposée au fond du bac à charbon de bois (4) le long d'une direction du flux d'air rotatif et est disposée en forme de goutte d'eau inclinée avec une petite extrémité et une grande extrémité, dans laquelle vue en coupe transversale, la partie convexe rotative (4.2) est basse sur la petite extrémité et haute sur la grande extrémité, de sorte qu'une hauteur convexe d'une extrémité est inférieure à la hauteur convexe d'une autre extrémité; dans lequel une partie de la pluralité de bouches d'aération (4.1) est agencée sur la partie convexe rotative (4.2).

2. Le grill sans fumée selon la revendication 1, **caractérisé en ce que** le ventilateur (5) est alimenté par une pile sèche, une source d'alimentation externe ou par une combinaison de celles-ci, et assure la régulation du débit d'air par l'intermédiaire d'un équipement de commande mécanique ou d'un équipement de contrôle tactile.

3. Le grill sans fumée selon la revendication 2, **caractérisé en ce qu'**il comporte un équipement de commande mécanique, ledit équipement de commande mécanique comprenant un bouton commutateur de potentiomètre (8) sur une paroi extérieure du boîtier (2), un commutateur de potentiomètre (9) étant fixé sur le bouton de commutateur de potentiomètre (8), et le commutateur de potentiomètre (9) réalisant une connexion à commande électrique avec le ventilateur (5) via un câble d'alimentation; un voyant de fonctionnement (10) étant installé sur le bouton commutateur de potentiomètre (8).

4. Le grill sans fumée de la revendication 3, **caractérisé en ce qu'**une grille de barbecue ou une plaque de barbecue (11) est placée sur le support (3).
